# FASCICULE DE BREVET EUROPEEN

(11) **EP 2 247 406 B1**
(45) Date de publication et mention de la délivrance du brevet: **22.02.2012**
(21) Numéro de dépôt: 09716511.2
(22) Date de dépôt: 29.01.2009
(51) Int. Cl.: B23Q 1/54, B23C 9/00

(54) **TETE DE FRAISAGE COMPORTANT UNE ARTICULATION DE TYPE CARDAN**
BOHRKOPF MIT KARDANSCHARNIER
DRILLING HEAD INCLUDING A GIMBAL-TYPE HINGE

(30) Priorité: 29.01.2008 FR 0800469
(43) Date de publication de la demande: 10.11.2010
(73) Titulaire: Thurnreiter, Philippe, 67230 Benfeld (FR)
(72) Inventeur: Thurnreiter, Philippe, 67230 Benfeld (FR)
(74) Mandataire: Metz, Paul
(86) Numéro de dépôt international: PCT/FR2009/000102
(87) Numéro de publication internationale: WO 2009/109721

(56) Documents cités:
- DE-A1- 19 850 603
- US-A- 5 584 621

## Description

La présente invention concerne une machine-outil de type machine d'usinage à cinq axes pour métaux ou matériaux composites.

Lors de l'usinage d'une pièce, il est connu que les meilleurs résultats sont obtenus lorsque l'axe de la tête de fraisage est constamment situé dans le plan normal à la surface à usiner, contenant le vecteur vitesse d'avance de l'outil.

Ainsi, une machine d'usinage est généralement prévue de sorte que la combinaison des déplacements en translation ou en pivotement de ses différents organes permet de positionner l'outil d'usinage en tout point d'un repère de référence lié à la pièce à usiner, et d'orienter l'axe rotatif de cet outil selon une direction quelconque de ce repère afin d'atteindre le résultat escompté.

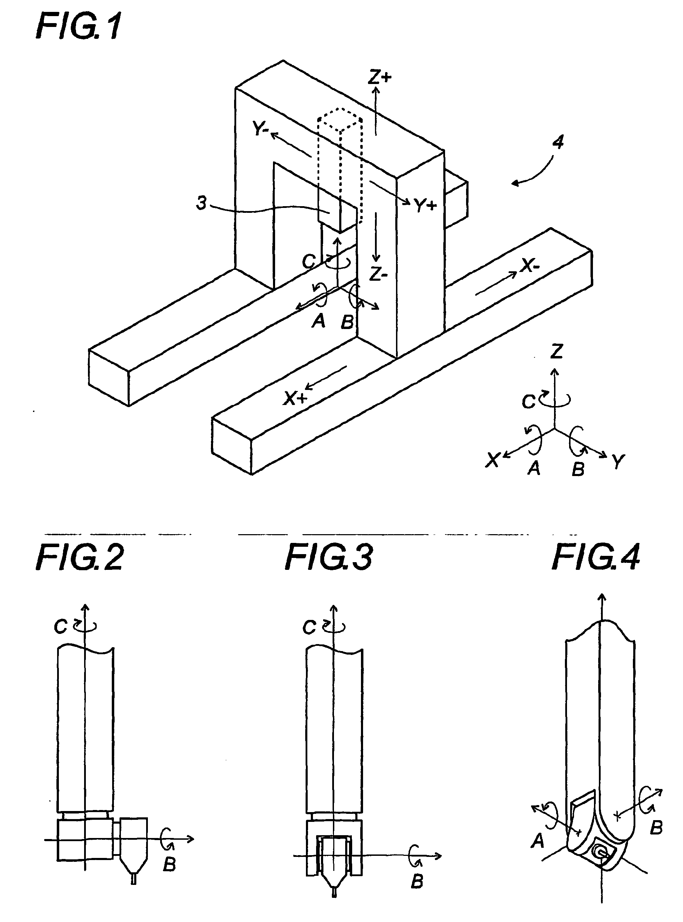

Par exemple, la demande de brevet française n° 2 552 002 divulgue un dispositif de fraisage comprenant un corps principal monté sur une tête de fraisage portant une broche d'usinage et susceptible d'occuper plusieurs positions d'indexation par rapport à ladite tête par pivotement autour de l'axe rotatif vertical appelé classiquement C situé dans le prolongement de l'axe de la broche de la tête de fraisage, ledit corps principal portant latéralement une unité porte-broche susceptible d'occuper plusieurs positions d'indexation par rapport au corps principal par pivotement autour de l'axe de pivotement horizontal Appelé classiquement B perpendiculaire à l'axe rotatif C, la broche de l'unité porte-broche étant elle-même perpendiculaire à l'axe de pivotement B. Comme cela peut être vu à partir de la figure 2, la position latérale de l'unité porte-broche a pour conséquence une extrémité particulièrement encombrante du dispositif de fraisage qui ne permet globalement que des usinages en surface des objets à usiner.

En effet, une machine d'usinage doit permettre l'usinage de surfaces curvilignes gauches ainsi que l'usinage à l'intérieur du volume de la pièce à usiner, nécessitant que la tête de fraisage puisse pénétrer et pivoter dans ce même volume sans provoquer d'interférence machine-pièce. A cet effet, la tête de fraisage doit être capable de plonger dans le volume de la pièce à usiner tout en enjambant mais en évitant d'entrer en contact avec d'éventuelles parties de matière en saillie qui ne doivent pas être usinées.

Ainsi, tel que divulgué dans les demandes de brevet européen n° EP 0885 081 et n° EP 1 405 691, les machines d'usinage comportent habituellement une tête de fraisage entraînée à rotation et comportant une ou plusieurs articulations, montée sur une extrémité d'un support vertical ou horizontal mobile dans les trois directions, à savoir selon les axes linéaires X, Y, Z connus de l'homme du métier. Dans les documents précités, afin de limiter le volume d'encombrement global au niveau de la tête de fraisage, les machines d'usinage comportent une tête de fraisage pivotante multiaxe comportant un bloc-fourche mobile monté pivotant autour de l'axe rotatif vertical C, un arbre-support monté tournant dans le bloc fourche autour de l'axe de pivotement horizontal B orthogonal à C et au moins une broche montée sur l'arbre-support et d'axe de pivotement horizontal A orthogonal à B et à C. Une machine d'usinage de ce type est représentée de manière schématique sur la figure 3.

Alternativement, comme cela est divulgué dans la demande de brevet française n° 2 496 531, pour les pièces à usiner de taille réduite, une partie des déplacements selon les axes X, Y, Z peut être assurée par le déplacement de la pièce à usiner, alors immobilisée sur un bâti de support mobile. Bien qu'elle soit parfaitement applicable, cette solution est rarement utilisée car elle ne peut pas s'appliquer aux pièces à usiner de grande taille et elle n'est pas utilisée dans le domaine visé par l'invention. On préfère en effet utiliser des machines de fraisage montées sur un portique mobile comme cela est représenté schématiquement sur la figure 1.

DE 198 50 603 décrit une machine-outil selon le préambule de la revendication 1.

Dans le but de permettre plus de possibilités de mouvements de la broche de fraisage, en plus du pivotement autour de l'axe de pivotement horizontal B, des machines de fraisage récentes comportent une tête de fraisage dont l'unité porte-broche permet un pivotement supplémentaire de la broche selon l'axe de pivotement horizontal A orthogonal à B et C, l'axe A étant décalé dans l'espace par rapport à l'axe de pivotement horizontal B de sorte que les axes de pivotement A et B ne se coupent pas. Une telle machine de fraisage, dite tête sans C car elle ne pivote pas autour de l'axe rotatif vertical C, est représentée schématiquement sur la figure 4.

Ces machines de fraisage récentes permettent un usinage aussi bien horizontal que vertical et, contrairement aux machines de fraisage antérieures, ne nécessitent pas de pivotement de la tête de fraisage selon l'axe rotatif vertical C dans le but d'orienter l'axe de pivotement horizontal A dans la bonne direction pour faire pivoter la tête de fraisage selon l'axe de pivotement horizontal A. En effet, un tel pivotement causé par une rupture de la normale, représente non seulement une perte de temps pendant lequel la tête de fraisage ne travaille pas, mais en outre, en cas de défaut d'axialité, le nez de broche de fraisage en rotation usine un trou rond de forme irrégulière alors qu'il est censé rester immobile en position spatiale contre la pièce à usiner.

De même, même si le défaut d'axialité est faible, le fait que l'outil soit incliné lors du pivotement sur C entraîne de nombreuses compensations qui ont généralement pour conséquence la formation inopportune de vagues sur les surfaces usinées.

Bien que les nouvelles têtes de fraisage puissent combiner un pivotement à la fois sur l'axe A et sur l'axe B, le fait que ces deux axes ne se coupent pas a généralement pour conséquence une limitation du débattement possible pour le nez de broche et se traduit également par un pilotage beaucoup plus compliqué de la machine car le décalage de broche doit être pris en compte, c'est-à-dire le décalage dans la direction X entre l'axe A et l'axe C. En effet, avec ces têtes de fraisage, la machine doit tenir compte de deux décalages de cote, à savoir le décalage entre l'axe A et le nez de broche, et le décalage entre l'axe B et le nez de broche.

Il existe donc un besoin pour une tête de fraisage permettant de combiner un pivotement à la fois sur l'axe A et sur l'axe B tout en ne présentant qu'un seul décalage de cote.

Pour résoudre ce problème technique, la tête de fraisage de la machine-outil selon l'invention comporte des moyens de pivotement selon les axes de pivotement horizontaux A et B de sorte que les axes de pivotement A et B se coupent à 90°, ce qui offre un débattement angulaire important pour l'unité porte-broche.

Dans ce but, la tête de fraisage selon l'invention, qui comprend une unité porte-broche comportant une broche de fraisage, est articulée à pivotement sur un coulant d'axe Z à une extrémité d'un support mobile selon les trois axes linéaires X, Y, Z au moyen d'un élément d'articulation et d'orientation par pivotement. Cet élément d'articulation et d'orientation par pivotement comprend un noyau central présentant deux axes de pivotement horizontaux A et B qui se coupent à 90°, respectivement associés aux axes linéaires X et Y, l'un assurant la liaison avec le coulant d'axe Z et l'autre avec l'unité porte-broche.

Ainsi, l'élément d'articulation et d'orientation par pivotement est d'une conception qui se rapproche d'un fonctionnement inspiré d'un mouvement de cardan.

Malgré la taille réduite de l'élément d'articulation et d'orientation par pivotement, la motorisation de l'orientation par pivotement de la tête de fraisage est rendue possible par l'utilisation de moteurs-couples et/ou de servomoteurs combinés à un nouveau type de réducteur de vitesse planétaire. En effet, cette utilisation permet un asservissement de l'axe avec une précision et une puissance suffisantes pour l'usinage de métaux tels que l'aluminium ou de différents matériaux composites.

Avantageusement, la tête de fraisage selon l'invention permet un débattement libre du nez de broche dans un volume au moins égal à une demi-sphère, ce qui est très largement supérieur aux limites de débattement de certaines têtes de fraisage antérieures dont le pivotement est souvent limité à +/-65°.

En outre, elle ne présente qu'un seul décalage de cote, entre l'axe de pivotement A-B et le nez de broche.

Ainsi, même en cas de défaut de géométrie, le pivotement selon l'axe A n'entraîne pas de fraisage irrégulier des volumes, au pire ce défaut sera de forme régulière par enlèvement de matière par le nez de broche.

De plus, il est possible de paramétrer le positionnement de l'unité porte-broche sur les différents axes en faisant le point d'origine de l'axe.

Enfin, la grande liberté de débattement de l'unité porte-broche combinée à sa puissance et à sa précision, offre un gain de temps considérable pour l'usinage rigoureux de pièces difficiles.

D'autres caractéristiques et avantages de l'invention apparaîtront à la lecture de la description détaillée qui va suivre, description faite en référence aux dessins annexés, dans lesquels :
- la figure 1 est une vue schématique en perspective d'une machine d'usinage sur laquelle sont représentés les différents axes linéaires X, Y, Z ainsi que les différents axes de pivotement A, B, C ;
- la figure 2 est une vue schématique de profil d'un dispositif de fraisage selon un premier mode de réalisation de l'art antérieur ;
- la figure 3 est une vue schématique de profil d'un dispositif de fraisage selon un second mode de réalisation de l'art antérieur ;
- la figure 4 est une vue schématique en perspective d'un dispositif de fraisage selon un troisième mode de réalisation de l'art antérieur ;
- la figure 5 est une vue schématique en perspective d'un dispositif de fraisage selon l'invention ;
- la figure 6 est une vue en perspective d'un dispositif de fraisage selon un mode de réalisation préféré de l'invention ;
- la figure 7 est une vue schématique simplifiée en perspective des motorisations pour l'entraînement de l'axe de pivotement horizontal B d'une tête de fraisage selon un mode de réalisation préféré de l'invention ;
- la figure 8 est une vue schématique simplifiée en perspective des motorisations pour l'entraînement de l'axe de pivotement horizontal A d'une tête de fraisage selon un mode de réalisation préféré de l'invention ;
- la figure 9 est une vue schématique en coupe verticale des motorisations pour l'entraînement de l'axe de pivotement horizontal A d'une tête de fraisage selon la figure 8 ;
- la figure 10 est une vue schématique en coupe verticale selon le plan XZ des motorisations pour l'entraînement d'une tête de fraisage selon un mode de réalisation préféré de l'invention ; et
- la figure 11 est une vue schématique en coupe verticale selon le plan YZ des motorisations pour l'entraînement d'une tête de fraisage selon un mode de réalisation préféré de l'invention.

La tête de fraisage selon la présente invention va maintenant être décrite de façon détaillée en référence aux figures 1 à 11. Les éléments équivalents représentés sur les différentes figures porteront les mêmes références numériques.

On définira dans la suite de cette description les notions de haut et de bas, d'inférieur et de supérieur, etc. en fonction de l'orientation adoptée par le dispositif représenté sur les différentes figures. Bien que, comme sur les figures, les têtes de fraisage soit habituellement utilisées tête en bas, il est évident que cette orientation ne sera pas forcément conservée en utilisation.

De même, nous nous référerons ici aux orientations spatiales connues de l'homme du métier pour représenter les différents axes, à savoir les axes linéaires X, Y, Z et les axes de pivotement A, B, C selon ces mêmes axes.

La tête de fraisage 1 selon l'invention est montée sur un coulant 2 désigné axe Z.

On notera que le coulant 2 d'axe Z peut être aussi bien horizontal que vertical et que la tête de fraisage 1 de l'invention est prévue pour être montée sur l'extrémité libre de celui-ci, par exemple au bas de celui-ci si le coulant 2 d'axe Z est vertical.

Ce coulant 2 est préférentiellement prévu pour être monté sur une extrémité 3 d'un support vertical ou horizontal 4 mobile dans les trois directions, à savoir selon les axes linéaires X, Y, Z, comme cela est connu de l'homme du métier, par exemple sur un portique mobile 4 tel que représenté schématiquement sur la figure 1.

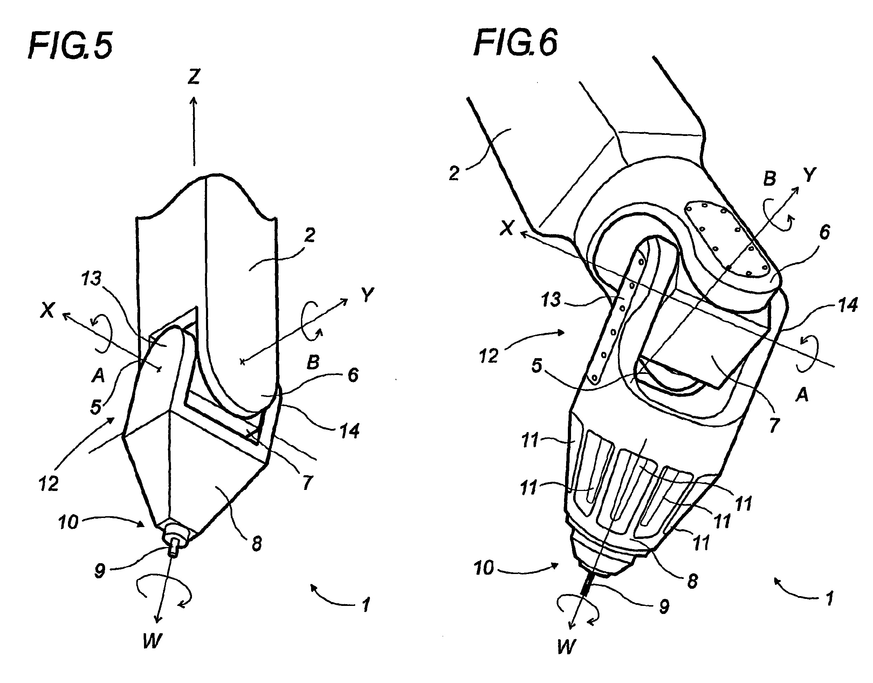

Comme représenté sur les figures 5 et 6, le guidage linéaire de l'axe Z est prolongé vers le bas dans une première paire de joues latérales 5, 6 afin de rigidifier la structure, ces joues 5, 6 étant préférentiellement monoblocs avec le coulant 2 de l'axe Z. Un alésage, ou autre moyen de pivotement, passant par les deux joues 5, 6 du coulant d'axe Z est désigné axe B.

Un noyau central 7, préférentiellement sous la forme d'un bloc sensiblement cubique ou cylindrique, est monté à pivotement autour de l'axe B entre les joues 5, 6 prolongeant le coulant 2.

Une unité porte-broche 8, préférentiellement de forme sensiblement conique, comprend une broche de fraisage 9 à une de ses extrémités, par exemple au niveau du nez de broche 10, ou de la pointe en cas de forme avantageusement conique de l'unité porte-broche.

La forme avantageusement conique de l'unité porte-broche 8 est connue de l'homme du métier, elle procure un encombrement minimal autour de la broche de fraisage 9 tout en réduisant le poids global de l'unité porte-broche 8, poids qui se traduit par des besoins proportionnels de la force de couple des motorisations pour l'entraînement assurant les mouvements de la tête de fraisage 1.

Dans un mode de réalisation préféré de l'invention représenté sur la figure 6, l'unité porte-broche 8 de forme conique présente en outre divers alésages 11 répartis régulièrement sur son pourtour afin d'offrir un gain de poids supplémentaire.

Au niveau de son autre extrémité 12, l'unité porte-broche 8 se prolonge, préférentiellement vers le haut, en une seconde paire de joues latérales 13, 14, ces joues 13, 14 étant préférentiellement monoblocs avec l'unité porte-broche 8. Ainsi, comme cela peut être remarqué sur les figures 5 et 6, l'unité porte-broche 8 est en forme de fourche.

Un alésage, ou autre moyen de pivotement, passant par les deux joues 13, 14 de l'unité porte-broche 8 est désigné axe de pivotement A.

Le noyau central 7 est également monté à pivotement autour de l'axe A entre les joues 13, 14 de l'unité porte-broche 8. Ainsi, le noyau central 7 assure le lien mécanique entre l'axe A et l'axe B.

Avantageusement, dans l'invention, l'axe de pivotement A coupe l'axe de pivotement B à 90° sensiblement au milieu du noyau central 7 et à distance sensiblement égale entre les deux joues 5, 6 du coulant 2 d'axe Z**.** Ainsi, les axes A et B fonctionnement à la manière d'un cardan dont le centre est constitué par le noyau central 7.

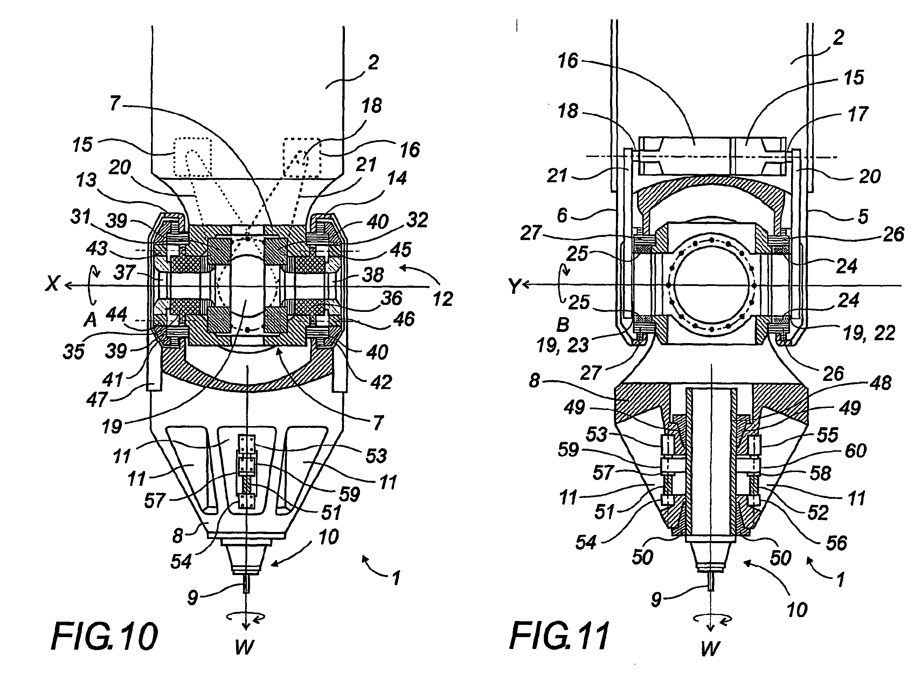

Grâce à cette configuration inhabituelle, la tête de fraisage 1 permet de combiner un pivotement à la fois sur l'axe A et sur l'axe B, ce qui offre un débattement angulaire important pour l'unité porte-broche 8. Ainsi, dans le mode de réalisation préféré de l'invention représenté sur les figures 10 et 11, on remarquera que la course de pivotement de l'axe A et de l'axe B est avantageusement au minimum de +/-90°.

Néanmoins, une grande difficulté réside dans le fait de guider et d'entraîner la tête de fraisage 1 pour ses mouvements de pivotement autour de l'axe A entre les joues 5, 6 du coulant 2 d'axe Z et autour de l'axe B entre les joues 13, 14 de l'unité porte-broche 8.

Nous appellerons ici entraînement de l'axe A, respectivement de l'axe B, le moyen d'entraînement de la tête de fraisage 1 pour ses mouvements de pivotement autour de l'axe A, respectivement de l'axe B.

Selon un mode de réalisation préféré de l'invention, l'entraînement de l'axe B est préférentiellement décalé jusque dans les joues 5, 6 du coulant 2 d'axe Z, tandis que l'entraînement de l'axe A est sensiblement logé dans le noyau central 7. Bien que cela paraisse moins avantageux, l'homme du métier peut envisager l'inverse.

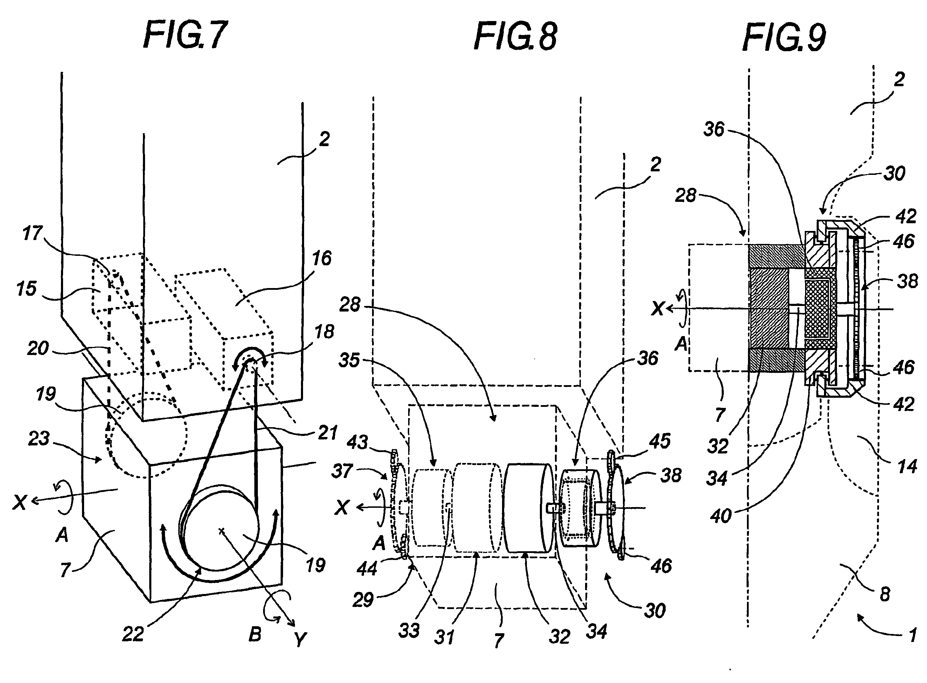

Le mode de réalisation préféré de l'invention est notamment représenté sur les figures 7 à 11, lesquelles s'intéressent particulièrement au guidage et à la motorisation pour l'entraînement de la tête de fraisage 1.

Comme représenté schématiquement sur la figure 7, l'entraînement de l'axe B est préférentiellement au moins partiellement logé dans les joues 5, 6 (non représentées sur cette figure) du coulant 2 d'axe Z et dans la partie inférieure de celui-ci. Deux moteurs 15, 16 sont logés dans le coulant 2 d'axe Z, dont les arbres de sortie 17, 18 sont reliés à un même arbre rotatif 19 du noyau central 7 selon l'axe B. Cette liaison cinématique se fait préférentiellement par une courroie 20, 21, une chaîne, une série de pignons ou analogue. Ainsi, chaque moteur 15, 16 logé dans le coulant 2 est respectivement relié à une extrémité différente 22, 23 de l'arbre rotatif 19 du noyau central 7 selon l'axe B, ces deux extrémités 22, 23 étant opposées de part et d'autre du noyau central 7.

Ces deux extrémités opposées 22, 23 sont préférentiellement montées chacune à rotation dans une poulie respective 24, 25, chacune de ces poulies 24, 25 étant montée dans un roulement respectif 26, 27 afin d'assurer le guidage de l'entraînement de la tête de fraisage 1 selon l'axe l'axe B et d'annuler tout défaut d'axialité potentiel. Au moins un de ces roulements respectifs 26, 27 est de préférence un roulement de précision pour charges combinées, par exemple du type de ceux fabriqués par INA FAG sous le nom commercial YRTM. Ces roulements, ci-après dénommés "roulements YRTM" comportent deux capteurs de mesure de positionnement intégrés, basés sur le déplacement d'une surface comportant un ruban magnétique devant un capteur. La coexistence de deux capteurs permet une sécurité de fonctionnement en cas de panne de l'un des capteurs.

Outre leur fonction de guidage, les roulements YRTM 26, 27 permettent donc également une mesure de positionnement angulaire de la tête de fraisage 1 selon l'axe B. L'homme du métier pourra cependant utiliser tout autre dispositif connu permettant d'effectuer une telle mesure.

Le diamètre de l'arbre rotatif 19 du noyau central 7 selon l'axe B sera choisi par l'homme du métier en fonction de la puissance et de la vitesse souhaitées pour le pivotement de la tête de fraisage 1 autour de l'axe B.

De même, selon une variante nom représentée de l'invention, un réducteur de vitesse, logé dans les joues 5, 6 du coulant 2, peut être relié cinématiquement entre chacun des moteurs 15, 16 logés dans le coulant 2 et l'arbre rotatif 19 du noyau central 7 selon l'axe B.

Comme représenté schématiquement sur la figure 8, l'entraînement de l'axe A est préférentiellement au moins partiellement logé dans le noyau central 7 et dans les joues 13, 14 (non représentées sur cette figure) de l'unité porte-broche 8.

Cet entraînement de l'axe A comprend préférentiellement une unité motrice 28 qui est logée dans le noyau central 7 et reliée cinématiquement à au moins une, préférentiellement deux unités réductrices de vitesse 29, 30 qui sont logées dans les joues 13, 14 de l'unité porte-broche 8.

Selon un mode de réalisation préféré de l'invention, l'unité motrice 28 comprend deux moteurs 31, 32 sensiblement symétriques, montés dos-à-dos dans le noyau central 7 et solidaires de celui-ci. Il s'agit préférentiellement de moteurs-couples 31, 32 qui ont notamment pour avantage d'être très compacts par rapport aux autres moteurs électriques conventionnels.

Par l'intermédiaire d'un accouplement 33, 34, chacun de ces moteurs-couples 31, 32 est relié à une des unités réductrices de vitesse 29, 30 logées dans les joues 13, 14 de l'unité porte-broche 8.

Selon un mode de réalisation préféré de l'invention représenté sur les figures 8 à 11, chacune de ces unités réductrices de vitesse 29, 30 comprend un premier réducteur 35, 36, par exemple de type réducteur de vitesse planétaire, et un second réducteur 37, 38, par exemple de type cinématique de pignons étagés.

Selon ce mode de réalisation préféré de l'invention, le premier réducteur 35, 36 est monté à l'intérieur d'un roulement 39, 40, préférentiellement de type YRTM, ce roulement 39, 40 étant monté à rotation dans une partie fixe 41, 42 solidaire de l'unité porte-broche 8. Ce roulement 39, 40 assure préférentiellement le centrage du premier réducteur 35, 36 et de l'axe A sur le noyau central 7.

Selon ce mode de réalisation, les satellites 43 et 44, 45 et 46 du second réducteur 37, 38 sont montés préférentiellement préchargés dans une partie fixe 41, 42 solidaire de l'unité porte-broche 8. Ainsi la précharge du second réducteur 37, 38 permet d'annuler le jeu et tout défaut d'axialité de la broche 9, et de ce fait le pivotement de l'unité porte-broche 8 selon l'axe A est parfaitement centré par rapport au noyau central 7.

Les parties fixes 41, 42 solidaires de l'unité porte-broche 8 et sur lesquelles sont montés les différents roulements 39, 40 sont préférentiellement les joues 13, 14 ou un pignon fixe 41, 42 solidaire(s) du carter 47 de l'unité porte-broche 8.

Dans une variante préférée de l'invention, un fourreau mobile 48 désigné axe W et supportant la broche 9 est également monté dans l'unité porte-broche 8 dans l'axe du nez de broche 10. Ceci permet avantageusement de déplacer la broche 9 selon l'axe W, par exemple afin d'effectuer des perçages qui sont alors beaucoup plus aisés et précis que s'ils étaient réalisés par un déplacement global de la tête de fraisage 1 qui résulterait d'un déplacement équivalent du nez de broche 10.

Le fourreau mobile 48 selon l'axe W est préférentiellement guidé par deux paliers de guidage 49 et 50, par exemple en bronze, comprenant chacun un moyen de blocage, de préférence hydraulique (non représenté). Ce moyen de blocage hydraulique du fourreau mobile 48 permet de bloquer la broche de fraisage 9 en position selon l'axe W lorsque celle-ci est en position pour tourner. Lorsqu'on souhaite effectuer un perçage, le fourreau mobile 48 supportant la broche de fraisage 9 est débloqué.

Chaque moyen de blocage hydraulique du fourreau mobile 48 est par exemple réalisé de manière connue par l'homme du métier au moyen d'un fluide sous pression déformant une paroi peu épaisse des paliers de guidage 49 et 50 située contre le fourreau mobile 48 supportant la broche 9.

L'entraînement du fourreau mobile 48 selon l'axe W est préférentiellement réalisé par une ou plusieurs vis à billes 51, 52. Selon le mode de réalisation préféré de l'invention représenté sur les figures 10 et 11, le fourreau mobile 48 est entraîné selon l'axe W par deux vis à billes 51, 52. Néanmoins, l'homme du métier adaptera le nombre de vis à billes à utiliser en fonction du poids de la broche électrique.

Chaque vis à billes 51, 52 est préférentiellement montée à rotation entre deux paliers fixes 53 et 54, 55 et 56 eux-mêmes montés solidaires de l'unité porte-broche 8. Un écrou de vis à billes 57, 58 est monté sur chaque vis à billes 51, 52, chaque écrou 57, 58 étant relié au corps du fourreau mobile 48 par l'intermédiaire d'un bras transversal 59, 60 respectif.

Selon le mode de réalisation préféré de l'invention, la course linéaire du fourreau mobile 48, et donc du nez de broche 10, selon l'axe W est de 100 mm environ.

Ce type d'entraînement pour le nez de broche 10 selon l'axe W est notamment peu coûteux, robuste, précis et permet d'indexer avec précision la position du nez de broche 10 selon l'axe W. Cependant, l'homme du métier pourra facilement adapter tout autre type d'entraînement pour le nez de broche 10, ce qui est particulièrement aisé du fait que la majeure partie du volume de l'unité porte-broche 8 ne comporte préférentiellement aucune des motorisations prévues pour le pivotement de l'axe A et de l'axe B.

De manière évidente, l'invention ne se limite pas au mode de réalisation préférentiel décrit précédemment et représenté sur les différentes figures.

Ainsi, on peut également prévoir un moyen de blocage pour l'axe de pivotement A et pour l'axe de pivotement B sur la tête de fraisage de l'invention de sorte qu'en cas d'urgence la tête de fraisage de l'invention soit maintenue en position. Ce moyen de blocage, de préférence hydraulique, peut être de tout type connu de l'homme du métier.

## Revendications

1. Machine-outil de type machine d'usinage à cinq axes pour métaux ou matériaux composites comportant un support (4) mobile selon les trois axes linéaires X, Y, Z, et comportant une tête de fraisage (1) pivotante et multiaxe montée sur un coulant (2) d'axe Z du support (4) de la machine-outil, ladite tête de fraisage (1) comprenant les éléments suivants :
. une unité porte-broche (8) comportant une broche de fraisage (9) à une de ses extrémités au niveau d'un nez de broche (10), et
. un élément d'articulation et d'orientation pour le montage articulé à pivotement de la tête de fraisage (1) sur le coulant (2) d'axe Z,
la machine-outil étant **caractérisée en ce que** :
. l'élément d'articulation et d'orientation de type cardan présente deux axes de pivotement horizontaux A et B qui se coupent à 90°, respectivement associés aux axes linéaires X et Y, l'un assurant la liaison avec le coulant (2) d'axe Z et l'autre avec l'unité porte-broche (8) ; et **en ce que**
. au niveau de son extrémité (12) ne comportant pas l'unité porte-broche (8), le coulant (2) d'axe Z comporte une première paire de joues latérales (5, 6) ;
. au niveau de son extrémité (12) ne comportant pas de broche de fraisage (9), l'unité porte-broche (8) comporte une seconde paire de joues latérales (13, 14) ;
. les joues latérales (5, 6) du coulant (2) sont reliées aux joues latérales (13, 14) de l'unité porte-broche (8) par l'intermédiaire d'un noyau central (7) monté pivotant autour de l'axe B entre les joues latérales (5, 6) du coulant (2) d'axe Z et les joues latérales (13, 14) de l'unité porte-broche (8) de manière à former un élément d'articulation et d'orientation de type cardan, à savoir autorisant un débattement libre dans un volume au moins égal à une demi-sphère pour les pièces articulées entre elles,
. la machine-outil comprend un moyen d'entraînement pour les mouvements de pivotement de la tête de fraisage (1) autour de l'axe B, ce moyen d'entraînement comprenant deux moteurs (15, 16) logés dans le coulant (2) d'axe Z, chaque moteur (15, 16) étant respectivement relié à une extrémité différente (22, 23) d'un même arbre rotatif (19) du noyau (7) selon l'axe B au moyen d'une liaison cinématique (20, 21), les eux extrémités (22, 23) étant opposées de part et d'autre du noyau central (7).

2. Machine-outil selon la revendication 1, **caractérisée en ce que** le noyau central (7) est un bloc sensiblement cubique ou cylindrique.

3. Machine-outil selon la revendication 1, **caractérisée en ce que** l'axe de pivotement A coupe l'axe de pivotement B à 90° sensiblement au milieu du noyau central (7) et à distance sensiblement égale entre la première paire de joues latérales (5, 6).

4. Machine-outil selon la revendication 1, **caractérisée en ce que** le moyen d'entraînement pour les mouvements de pivotement de la tête de fraisage (1) autour de l'axe B est au moins partiellement logé dans la première paire de joues latérales (5, 6).

5. Machine-outil selon la revendication 1, **caractérisée en ce que** les deux extrémités (22, 23) de l'arbre rotatif (19) sont montées chacune à rotation dans une poulie respective (24, 25), chacune de ces poulies (24, 25) étant montée dans un roulement respectif (26, 27).

6. Machine-outil selon la revendication 1, **caractérisée en ce que** le moyen d'entraînement de la tête de fraisage (1) pour ses mouvements de pivotement autour de l'axe B comprend un réducteur de vitesse logé dans les joues latérales (5, 6) du coulant (2), chaque réducteur de vitesse étant relié cinématiquement entre un des moteurs (15, 16) et l'arbre rotatif (19) du noyau central (7) selon l'axe B, et **caractérisée en ce qu'elle** comprend un moyen d'entraînement pour ses mouvements de pivotement autour de l'axe A et **en ce que** ce moyen d'entraînement est au moins partiellement logé dans le noyau central (7) et dans les joues (13, 14) de l'unité porte-broche (8).

7. Machine-outil selon la revendication 1, **caractérisée en ce que** le moyen d'entraînement pour sesmouvements de pivotement autour de l'axe A et **en ce que** ce moyen d'entraînement comprend une unité morice (28) qui est logée dans le noyau central (7) et reliée cinématiquement à au moins une unité réductrice de vitesse (29, 30) qui est logée dans les joues (13, 14) de l'unité porte-broch (8).

8. Machine-outil selon la revendication précédente, **caractérisée en ce que** l'unité motrice (28) comprend deux moteurs (31, 32) sensiblement symétriques, montés dos-à-dos dans le noyau central (7) et solidaires de celui-ci et **en ce que** chacun de ces moteurs (31, 32) est relié cinématiquement par l'intermédiaire d'un accouplement (33, 34) à l'unité réductrice de vitesse (29, 30) logée dans les joues (13, 14) de l'unité porte-broche (8).

9. Machine-outil selon la revendication précédente, **caractérisée en ce que** les moteurs (31, 32) pour le moyen d'entraînement de la tête de fraisage (1) pour ses mouvements de pivotement autour de l'axe A sont des moteurs-couples.

10. Machine-outil selon l'une quelconque des revendications 8 et 9, **caractérisée en ce que** chacune des unités réductrices de vitesse (29, 30) comprend un premier réducteur (35, 36) et un second réducteur (37, 38).

11. Machine-outil selon la revendication 1, **caractérisée en ce qu'**un fourreau mobile (48) selon un axe W et supportant la broche (9) est monté dans l'unité porte-broche (8) dans l'axe du nez de broche (10).

12. Machine-outil selon la revendication précédente, **caractérisée en ce que** le fourreau mobile (48) selon l'axe W est guidé par deux paliers de guidage (49 et 50) comprenant chacun un moyen de blocage, **en ce que** le fourreau mobile (48) est déplaçable selon l'axe W au moyen d'une ou plusieurs vis à billes (51, 52), chaque vis à billes (51, 52) étant montée à rotation entre deux paliers fixes (53, 54, 55, 56) montés solidaires de l'unité porte-broche (8) et **en ce qu'**un écrou de vis à billes (57, 58) est monté sur chaque vis à billes (51, 52), chaque écrou (57, 58) étant relié au corps du fourreau mobile (48) par l'intermédiaire d'un bras transversal (59, 60) respectif.

13. Machine-outil selon la revendication 1 ou 5 **caractérisée en ce qu'**elle comprend des roulements (26, 27, 39, 40) et **en ce qu'**au moins un des roulements (26, 27, 39, 40) est un roulement de précision pour charges combinées avec système de mesure intégré permettant également une mesure du positionnement angulaire de la tête de fraisage (1).

## Claims

1. Machine tool of the type milling centre with five axes for metals or composite material including a support (4) which is mobile according to the three linear axes X, Y, Z, and including a pivoting multiaxis milling head (1) mounted on a tail (2) of the Z axis of the support (4) of the machine tool, said milling head (1) comprising the following elements:
• a pin-holder unit (8) including a milling pin (9) at one of its ends at the level of a pin nose (10), and
• a joint and orientation element for the pivoting assembly of the milling head (1) on the tail (2) of axis Z, the machine tool being **characterized in that**:
• the joint and orientation element of the cardan type presents two horizontal rotation axes A and B which intersect at 90°, associated with the linear axes X and Y respectively, the one ensuring the connection with the tail (2) of axis Z and the other with the pin-holder unit (8); and **in that**
• at its end (12) not including the pin-holder unit (8), the tail (2) of axis Z includes a first pair of side jaws (5, 6);
• at its end (12) not including any milling pin (9), the pin-holder unit (8) includes a second pair of side jaws (13, 14);
• the side jaws (5, 6) of the tail (2) are linked to the side jaws (13, 14) of the pin-carrier unit (8) by means of a central nucleus (7) mounted pivoting around the B axis between the side jaws (5, 6) of the tail (2) of the Z axis and the side jaws (13, 14) of the pin-carrier unit (8) in order to form a joint and orientation element of the cardan type, to allow a clearance in a volume at least equal to a hemisphere for the pieces which are articulated among them,
• the machine tool includes a driving means for the rotation of the milling head (1) around the B axis, this driving means comprising two motors (15, 16) housed in the tail (2) of the Z axis, each motor (15, 16) being respectively connected to a different end (22, 23) of a same rotative shaft (19) of the central nucleus (7) according to the B axis by means of a kinematic connection (20, 21), the two ends (22, 23) being opposed on both sides of the central nucleus (7).

2. Machine tool according to claim 1, **characterized in that** the central nucleus (7) is an essentially cubic or cylindrical block.

3. Machine tool according to claim 1, **characterized in that** the rotation axis A cuts the rotation axis B at 90° essentially in the middle of the central nucleus (7) and at essentially equal distance between the first pair of side jaws (5, 6).

4. Machine tool according to claim 1, **characterized in that** the driving means for the rotation of the milling head (1) around the B axis is at least partially housed in the first pair of side jaws (5, 6).

5. Machine tool according to claim 1, **characterized in that** the two ends (22, 23) of the rotative shaft (19) are mounted each rotating in a respective pulley (24, 25), each of these pulleys (24, 25) being mounted in a respective bearing (26, 27).

6. Machine tool according to claim 1, **characterized in that** the driving means of the milling head (1) for its rotation around the B axis includes a speed reducer housed in the side jaws (5, 6) of the tail (2), each speed reducer being linked kinetically between one of the motors (15, 16) and the rotative shaft (19) of the central nucleus (7) according to the B axis, and **characterized by** including a driving means for its rotation around the A axis and in that this driving means is at least partially housed in the central nucleus (7) and in the jaws (13, 14) of the pin-holder unit (8).

7. Machine tool according to claim 1, **characterized by** including a driving means for its rotation around the A axis and in that this driving means includes a power unit (28) which is housed in the central nucleus (7) and kinetically linked to at least one speed reducer unit (29, 30) which is housed in the jaws (13, 14) of the pin-holder unit (8).

8. Machine tool according to the previous claim, **characterized in that** the motor unit (28) includes two essentially symmetrical motors (31, 32) mounted back-to-back in the central nucleus (7) and attached to it, and **in that** each of these motors (31, 32) is kinetically linked, by a coupling (33, 34), to the speed reducer unit (29, 30) housed in the jaws (13, 14) of the pin-holder unit (8).

9. Machine tool according to the previous claim, **characterized in that** the motors (31, 32) for the driving means of the milling head (1) for its rotation around the an axis are torque motors.

10. Machine tool according to any of the claims 8 and 9, **characterized in that** each of the speed reducers units (29, 30) includes a first reducer (35, 36) and a second reducer (37, 38).

11. Machine tool according to claim 1, **characterized in that** a sheath (48), mobile according to an axis W and supporting the pin (9), is mounted in the pin-carrier unit (8) in the axis of the pin nose (10).

12. Machine tool according to the previous claim, **characterized in that** the sheath (48) mobile according to the axis W is guided by two guide bearings (49 and 50) each comprising a locking means, **in that** the mobile sheath (48) is displaceable according to the axis W by means of one or several ball screws (51, 52), each ball screw (51, 52) being mounted rotating between two fixed bearings (53, 54, 55, 56) attached to the pin-holder unit (8) and **in that** a ball screw nut (57, 58) is mounted on each ball screw (51, 52), each nut (57, 58) being linked to the body of the mobile sheath (48) by a respective transverse arm (59, 60).

13. Machine tool according to claim 1 or 5 **characterized by** including bearings (26, 27, 39, 40) and in that at least one of the bearings (26, 27, 39, 40) is a precision bearing for loads combined with integrated measuring system allowing also to measure the angular positioning of the milling head (1).

## Patentansprüche

1. Werkzeugmaschine vom Typ Bearbeitungsmaschine mit fünf Achsen für Metalle oder Verbundmaterialien mit einem Träger (4), der auf den drei linearen Achsen X, Y, Z beweglich ist, und mit einem drehbaren mehrachsigen Fräskopf (1), der auf einen Schieber (2) der Z-Achse des Trägers (4) der Werkzeugmaschine montiert ist, besagter Fräskopf (1) folgende Elemente aufweist:
• eine Spindelträgereinheit (8) mit einer Frässpindel (9) an einem ihrer Enden auf Höhe einer Spindelnase (10), und
• ein Gelenk- und Ausrichtungselement zur drehbaren Lagerung des Fräskopfs (1) auf dem Schieber (2) der Z-Achse, wobei die Werkzeugmaschine **dadurch gekennzeichnet ist, dass**:
• das Gelenk- und Ausrichtungselement vom Typ Kardanwelle zwei waagrechte Drehachsen A und B aufweist, die sich im 90°-Winkel schneiden, verbunden mit der linearen X- bzw. Y-Achse, wobei die eine die Verbindung mit dem Schieber (2) der Z-Achse sichert und die andere die mit der Spindelträgereinheit (8); sowie dadurch, dass
• auf Höhe ihres Endes (12), das nicht die Spindelträgereinheit (8) umfasst, der Schieber (2) der Z-Achse ein erstes Paar Seitenwangen (5, 6) umfasst;
• auf Höhe ihres Endes (12), das nicht die Frässpindel (9) umfasst, die Spindelträgereinheit (8) ein zweites Paar Seitenwangen (13, 14) umfasst;
• die Seitenwangen (5, 6) des Schiebers (2) mit den Seitenwangen (13, 14) der Spindelträgereinheit (8) verbunden sind, und zwar durch einen zentralen Kern (7), der um die B-Achse drehbar zwischen die Seitenwangen (5, 6) des Schiebers (2) der Z-Achse und die Seitenwangen (13, 14) der Spindelträgereinheit (8) montiert ist, um ein Gelenk- und Ausrichtungselement vom Typ Kardanwelle zu bilden, zwecks eines freien Ausschlags in einem Volumen mindestens gleich einer Halbkugel für die gelenkig miteinander verbundenen Teile,
• die Werkzeugmaschine ein Mitnehmermittel für die Drehbewegungen des Fräskopfs (1) um die B-Achse umfasst, das zwei Motoren (15, 16) in dem Schieber (2) der Z-Achse umfasst, wobei jeder Motor (15, 16) mit einem anderen Ende (22, 23) derselben rotierenden Welle (19) des zentralen Kerns (7) verbunden ist, gemäß der B-Achse mittels einer kinematischen Verbindung (20, 21), wobei die beiden Enden (22, 23) sich auf beiden Seiten des zentralen Kerns (7) gegenüberliegen.

2. Werkzeugmaschine nach Anspruch 1, **gekennzeichnet dadurch, dass** der zentrale Kern (7) ein im wesentlichen kubischer oder zylindrischer Block ist.

3. Werkzeugmaschine nach Anspruch 1, **gekennzeichnet dadurch, dass** die Drehachse A die Drehachse B im Winkel von 90° im wesentlichen in der Mitte des zentralen Kernes (7) schneidet und in im wesentlichen gleichem Abstand zwischen dem ersten Seitenwangenpaar (5, 6).

4. Werkzeugmaschine nach Anspruch 1, **gekennzeichnet dadurch, dass** das Mitnehmermittel für die Drehbewegungen des Fräskopfs (1) um die B-Achse mindestens teilweise in dem ersten Seitenwangenpaar (5, 6) untergebracht ist.

5. Werkzeugmaschine nach Anspruch 1, **gekennzeichnet dadurch, dass** die beiden Enden (22, 23) der rotierenden Welle (19) jedes rotierend in einer dafür vorgesehenen Laufrolle (24, 25) montiert sind, wobei jede dieser Laufrollen (24, 25) in je einem Lager (26, 27) montiert ist.

6. Werkzeugmaschine nach Anspruch 1, **gekennzeichnet dadurch, dass** das Mitnehmermittel des Fräskopfs (1) für seine Drehbewegungen um die B-Achse ein Untersetzungsgetriebe umfasst, das in den Seitenwangen (5 6) des Schiebers (2) untergebracht ist, wobei jedes Untersetzungsgetriebe kinematisch zwischen einem der Motoren (15, 16) und der rotierenden Welle (19) des zentralen Kerns (7) gemäß der B-Achse verbunden ist, und **gekennzeichnet dadurch, dass** sie ein Mitnehmermittel für ihre Drehbewegungen um die A-Achse umfasst sowie dadurch, dass dieses Mitnehmermittel mindestens teilweise in dem zentralen Kern (7 und in den Wangen (13, 14) der Spindelträgereinheit (8) untergebracht ist.

7. Werkzeugmaschine nach Anspruch 1, **gekennzeichnet dadurch, dass** sie ein Mitnehmermittel für ihre Drehbewegungen um die A-Achse umfasst sowie dadurch, dass dieses Mitnehmermittel eine Antriebseinheit (28) umfasst, die in dem zentralen Kern (7) untergebracht ist und kinematisch mit mindestens einem Untersetzungsgetriebe (29, 30) verbunden ist, das in den Wangen (13, 14) der Spindelträgereinheit (8) untergebracht ist.

8. Werkzeugmaschine nach dem vorherigen Anspruch, **gekennzeichnet dadurch, dass** die Antriebseinheit (28) zwei im wesentlichen symmetrische Motoren (31, 32) umfasst, die Rücken an Rücken in dem zentralen Kern (7) montiert und einstückig mit diesem sind, sowie dadurch, dass jeder dieser Motoren (31, 32) kinematisch mittels einer Kopplung (33, 34) mit dem Untersetzungsgetriebe (29, 30) verbunden ist, das in den Wangen (13, 14) der Spindelträgereinheit (8) untergebracht ist.

9. Werkzeugmaschine nach dem vorherigen Anspruch, **gekennzeichnet dadurch, dass** die Motoren (31, 32) für das Mitnehmermittel des Fräskopfs (1) für seine Drehbewegungen um die Achse A Drehmomentmotoren sind.

10. Werkzeugmaschine nach einem beliebigen der Patentansprüche 8 und 9, **gekennzeichnet dadurch, dass** jede Untersetzungsgetriebeeinheit (29, 30) ein erstes Untersetzungsgetriebe (35, 36) und ein zweites Untersetzungsgetriebe (37, 38) umfasst.

11. Werkzeugmaschine nach Anspruch 1, **dadurch gekennzeichnet, dass** eine in einer W-Achse bewegliche Hülse (48), die die Spindel (9) trägt, in der Spindelträgereinheit (8) in der Achse der Spindelnase (10) montiert ist.

12. Werkzeugmaschine nach dem vorherigen Anspruch, **gekennzeichnet dadurch, dass** die bewegliche Hülse (48) gemäß der Achse W durch zwei Führungslager (49 u 50) mit jeweils einem Blockierungsmittel geführt wird, dadurch dass, die bewegliche Hülse (48) in der Achse W mittels eines oder mehrerer Kugelgewindetriebe (51, 52) verschiebbar ist, wobei jeder Kugelgewindetrieb (51, 52) rotierend zwischen zwei festen Lagern (53, 54, 55, 56) montiert ist, einstückig mit der Spindelträgereinheit (8), sowie dadurch, dass eine Kugelgewindetriebmutter (57, 58) auf jeden Kugelgewindetrieb (51, 52) montiert ist, wobei jede Mutter (57, 58) mit dem Körper der beweglichen Hülse (48) jeweils mittels eines Querarmes (59, 60) verbunden ist.

13. Werkzeugmaschine nach Anspruch 1 oder 5, **gekennzeichnet dadurch, dass** sie Radlager (26, 27, 39, 40) umfasst, sowie dadurch, dass mindestens eines der Radlager (26, 27, 39, 40) ein Präzisionsradlager für kombinierte Ladungen mit integriertem Messsystem ist, wodurch auch eine Messung der Winkelpositionierung des Fräskopfes (1) möglich wird.
